# FASCICULE DE BREVET EUROPEEN

(11) **EP 0 554 141 B1**
(45) Date de publication et mention de la délivrance du brevet: **30.07.1997**
(21) Numéro de dépôt: 93400120.7
(22) Date de dépôt: 19.01.1993
(51) Int. Cl.: C08F 10/02, C08F 4/02

(54) **Procédé d'activation de support à base de chlorure de magnésium entrant dans la fabrication de la composante catalytique de polymérisation de l'éthylène**
Verfahren zur Aktivierung eines Magnesium-Chloride-Trager für Ethylenpolymerisationkatalysatorbestandteile
Process for activating a magnesium chloride support for an ethylene polymerization catalyst component

(30) Priorité: 27.01.1992 FR 9200821
(43) Date de publication de la demande: 04.08.1993
(73) Titulaire: ELF ATOCHEM S.A., 92800 Puteaux (FR)
(72) Inventeur: Spitz, Roger, F-69369 St. Symphorien d'Ozon (FR); Patin, Maryse, B-4000 Liège (BE); Brun, Claude, F-64320 Idron (FR)

(56) Documents cités:
- FR-A- 2 052 706
- GB-A- 2 099 004
- US-A- 4 719 193

## Description

La présente invention concerne un procédé d'activation de support à base de chlorure de magnésium entrant dans la fabrication de la composante catalytique de polymérisation de l'éthylène. Le procédé consiste à activer le support à base de chlorure de magnésium au moyen d'éther cyclique sans altération de la structure initiale du support.

De façon connue le système catalytique du type Ziegler-Natta pour la polymérisation de l'éthylène est généralement constitué de deux éléments indissociables : une composante catalytique à base de métal de transition déposé sur un support à base de chlorure de magnésium et un cocatalyseur généralement à base d'un composé d'aluminium.

De nombreux brevets décrivent ces composantes catalytiques et ces cocatalyseurs ainsi que leurs procédés d'obtention.

Il est généralement connu que les supports à base de chlorure de magnésium entrant dans la composition de la composante catalytique utilisé pour la polymérisation de l'éthylène doivent être activés. Cette activation de support permet d'assurer ultérieurement à la composante une bonne productivité. Cette activation du support s'effectue actuellement par exemple par broyage du support à base de chlorure de magnésium ou encore par dissolution dans un solvant activant tel qu'un alcool et précipitation du support au moyen d'un liquide non réactif et non solvant tel qu'un hydrocarbure aliphatique.

Si cette technique permet de réaliser des supports actifs permettant de fabriquer des composantes catalytiques possédant de bonnes productivités, il est impossible de réaliser des composantes de morphologies contrôlées, la morphologie du support initial ayant été détruite par le traitement d'activation.

L'intérêt de réaliser des composantes de morphologie contrôlée est de supprimer la production de fines particules de polymère dans les réacteurs de polymérisation. Les polymères obtenus à partir de cette composante possèdent une meilleure coulabilité ce qui permet une plus grande facilité de manipulation des poudres.

Le traitement d'activation du support par l'éther cyclique ne doit pas être confondu avec le traitement ultérieur éventuel du système catalytique ou du cocatalyseur par un donneur d'électrons en vue de donner au système catalytique telle ou telle propriété, comme c'est par exemple le cas dans le FR-A 2 640 273 où un éther est associé au cocatalyseur ou au système catalytique en vue de fabriquer un polyéthylène linéaire de distribution étroite de masse moléculaire.

Le support à base de chlorure de magnésium se présente sous la forme de MgCl₂ ou de MgCl₂,MgO ou encore de tout composé solide apte à servir de support pour composante catalytique de type Ziegler-Natta, dont le composé majoritaire est du MgCl₂ et dont la teneur en eau est inférieure à 5 % en poids. Souvent le support à base de ce chlorure de magnésium, sans traitement initial, ne peut tel quel conduire à une composante catalytique possédant une quelconque performance catalytique. Un support non performant est tel que la composante catalytique qui en découle ne donne pas une activité en polymérisation en suspension de plus de 1000 grammes de polymère par gramme de composante catalytique, les conditions de polymérisation étant : 1 litre d'hexane pour environ 15 mg de composante catalytique et 1,5 ml de triisobutylaluminium, avec une pression totale de 13 bars, une pression d'éthylène de 6 bars, une pression d'hydrogène de 4 bars et une température de 80°C pour un temps de séjour de 2 heures.

L'activation du support à base de chlorure de magnésium s'effectue en mettant en suspension le support dans une solution de liquide inerte vis à vis du support et d'éther cyclique. Il est important que la quantité d'éther cyclique mise en oeuvre ne puisse altérer la structure initiale du support à base de chlorure de magnésium. C'est pourquoi il est recommandé que dans la mise en oeuvre du procédé d'activation le rapport molaire d'éther cyclique sur chlorure de magnésium soit inférieur à 1, 5. De plus, comme le support à base de chlorure de magnésium doit se trouver en suspension dans un liquide inerte, il est également recommandé que l'éther cyclique soit fortement dilué dans le liquide inerte. Généralement le rapport en volume de liquide inerte sur l'éther cyclique est compris entre 10 et 20.

Afin d'éviter toute altération du support à base de chlorure de magnésium il est exclu de le mettre directement en contact avec l'éther cyclique. Pour cette raison le support à base de chlorure de magnésium est mis en suspension dans la solution préalablement préparée de liquide inerte et d'éther cyclique. Dans un autre mode, le support à base de chlorure de magnésium est préalablement mis en suspension dans le liquide inerte avant d'ajouter l'éther cyclique.

L'activation peut se faire sous agitation. Habituellement le traitement d'activation s'effectue à une température comprise entre T_{eb} et (T_{eb} + 20°C), T_{eb} étant la température d'ébullition de l'éther cyclique.

L'activation terminée, le support à base de chlorure de magnésium est séparé du milieu de suspension et habituellement séché en atmosphère inerte ou sous vide à une température de 20 à 150°C.

Le liquide inerte servant pour la mise en suspension du support est généralement choisi parmi les hydrocarbures aliphatiques tels que l'hexane, l'heptane, l'octane et autres.

L'éther cyclique est choisi parmi les monoéthers dont l'oxygène forme un cycle possédant au moins 4 atomes de carbone et 12 au plus. Il n'est pas exclu que certains atomes de carbone du cycle soient liés à des radicaux hydrocarbonés substituants, le nombre d'atomes de carbone total, dans ce cas, de l'éther cyclique ne dépassant pas 16. Parmi ces éthers peuvent être cités : le tétrahydrofurane, le tétrahydropyrane, le 2-méthyl-tétrahydrofurane, le 3-méthyl-tétrahydropyrane.

Le support activé obtenu selon l'invention est utilisé dans la fabrication de composante catalytique du type Ziegler-Natta. Cette composante est, de façon connue, le résultat de la combinaison du support activé à base de chloruré de magnésium et d'un composé de métal de transition en présence éventuellement d'un donneur ou d'un accepteur d'électrons et de tout autre composé utilisable dans ce type de catalyseur. Le composé de métal de transition est généralement choisi parmi les composés de formule Me (OR) ₙXₘ₋ₙ dans laquelle :
M est le vanadium, le chrome et plus particulièrement le titane
X est le brome, l'iode et plus particulièrement le chlore
R est un radical hydrocarboné aliphatique ou aromatique de C₁ à C₁₄ ou COR₁ avec R₁ un radical hydrocarboné aliphatique ou aromatique de C₁ à C₁₄
"m" correspond à la valeur du métal de transition et "n" est une valeur inférieure ou égale à "m"

Le composé de métal de transition particulièrement recommandé est choisi parmi les composés du titane de formule Ti(OR)ₓCl₄₋ₓ, R étant défini ci-dessus, x étant un nombre de 0 à 4.

Le donneur ou accepteur d'électrons pouvant être associé aux constituants de la composante catalytique est un composé organique liquide ou solide connu pour entrer dans la composition de ces catalyseurs. Le donneur d'électrons peut être un composé mono ou polyfonctionnel avantageusement choisi parmi les acides carboxyliques aliphatiques ou aromatiques et leurs esters alcoyliques, les éthers aliphatiques ou cycliques, les cétones, les esters vinyliques, les dérivés acryliques, en particulier acrylates ou méthacrylates d'alcoyle, et les silanes. Conviennent notamment comme donneurs d'électrons les composés tels que paratoluate de méthyle, benzoate d'éthyle, acétate d'éthyle ou de butyle, éther éthylique, para-anisate d'éthyle, dibutylphtalate, dioctylphtalate, diisobutylphtalate, tétrahydrofuranne, dioxane, acétone, méthylisobutylcétone, acétate de vinyle, méthacrylate de méthyle, et les silanes tels que phényltriéthoxysilane et cyclohexylméthyldiméthoxysilane, les alcoxysilanes aromatiques ou aliphatiques.

L'accepteur d'électrons est un acide de Lewis, choisi de préférence parmi les chlorures d'aluminium, le trifluorure de bore, le chloranile ou encore les alcoylaluminiums et alcoylmagnésiums.

La composante obtenue à partir du support activé entre dans le système catalytique de polymérisation de l'éthylène en association avec un cocatalyseur. Ce cocatalyseur est habituellement choisi parmi les alkylaluminiums. Parmi ces produits peuvent être cités les composés de formule Al(R₂)_{c}X'_{d}Hₑ dans laquelle
X' est Cl,
R₂, représente un radical hydrocarboné saturé de C₁ à C₁₄ ou (OR₃),
R₃ étant un radical hydrocarboné saturé de C₁ à C₁₄
avec : 0 ≤ d ≤ 1,5 ; 0 ≤ e ≤ 1 et c + d + e = 3

Comme exemples, on peut citer : Al(C₂H₅)₃, Al(C₂H₅)₂Cl, Al(C₄H₉)₃, Al₂(C₂H₅)₃Cl₃, Al(C₄H₉)₂H, Al(C₆H₁₃)₃, Al(C₈H₁₇)₃, Al(C₂H₅)₂H et Al(C₂H₅)₂ (OC₂H₅). Peuvent entre être cités les aluminoxanes et aluminosiloxanes.

L'activation permet d'activer non seulement les supports non performants, mais encore peut permettre d'activer des supports qui donnent des catalyseurs performants en leur conférant des activités supérieures. Cela concerne par exemple les supports obtenus par chloration de composés à base d'organomagnésiens par des agents chlorants, en présence d'éthers aliphatiques.

La polymérisation de l'éthylène en présence du système catalytique est connue. Elle se fait généralement en suspension ou en phase gazeuse.

Les exemples suivants illustrent l'invention sans toutefois la limiter. La largeur de la distribution des tailles des particules est exprimée en D90/D10. D90 est le diamètre en dessous duquel se trouvents 90 % en masse des particules et D10 est le diamètre en dessous duquel se trouvent 10 % en masse des particules, les valeurs sont déterminées au moyen d'un granulomèter MALVERN (Master Particule Sizer M5.4)

### EXEMPLE 1

11,7 g de solide A MgCl₂-MgO contenant 11,7 % en poids de MgO de caractéristiques granulométriques suivantes : largeur de la distribution des tailles de particules : 6,8 et taille moyenne des particules : 62 µm, subissent un traitement d'activation par traitement avec un mélange tétrahydrofurane (THF)-heptane.

Le solide est mis en suspension dans 80 ml d'heptane, 10 ml de THF sont ajoutés à la suspension à température ambiante, puis la suspension est portée à 70°C pendant 1h30.

Après décantation et siphonnage du surnageant, le solide obtenu est séché sous vide de 20 à 130°C.

Les caractéristiques granulométriques finales du produit B obtenu sont : largeur de la distribution des tailles des particules : 7,0 et taille moyenne : 61 µm.

Le solide B est mis en contact à l'abri de l'air avec 40 ml de TiCl₄ pendant 1 heure à 80°C. Puis le solide est lavé trois fois :
- 1 lavage au 1,2-dichloroéthane, 30 minutes à 85°C
- 1 lavage avec un mélange 1,2-dichloroéthane-toluène 1/3-2/3, 30 minutes à 85°C
- 1 lavage au toluène, 30 minutes à 85°C

Après cette succession de lavages, le solide est à nouveau traité par 40 ml de TiCl₄, 1 heure à 80°C. Le solide obtenu est séché sous vide à température ambiante. On obtient un solide C contenant 5 % en poids de titane.

La composante catalytique C est engagée en polymérisation en suspension dans les conditions de polymérisation en suspension suivantes : 1 litre d'hexane, 1,5 ml de triisobutylaluminium, environ 15 mg de composante catalytique, une pression totale de 13 bars, une pression d'éthylène de 6 bars, une pression d'hydrogène de 4 bars, une température de 80°C et un temps de séjour de 2 heures.

On obtient une productivité de 14200 g de polyéthylène par g de composante catalytique. La masse volumique apparente du polymère est de 0,44 g/cm³. Les caractéristiques granulométriques du polyéthylène sont : largeur de la distribution des tailles des particules : 7,8 et taille moyenne des particules : 227 µm.

### EXEMPLE 2 (COMPARATIF)

4,8 g de solide A MgCl₂-MgO contenant 11,7 % en poids de MgO sont directement traités par TiCl₄ dans les conditions de la composante catalytique C, sans avoir subi au préalable le traitement d'activation. On-obtient la composante catalytique D contenant 0,9 % en poids de titane.

La composante catalytique D est engagée en polymérisation en suspension dans les conditions de l'exemple 1. On obtient une productivité de 850 g de polyéthylène par g de composante catalytique. La masse volumique apparente du polymère est de 0,36 g/cm³.

### EXEMPLE 3

Sous argon, 15,1 g de support E de composition (MgCl₂, 0,5 THF) activé par traitement d'un complexe MgCl₂, THF à 120°C sont traités par TiCl₄ dans les conditions de l'exemple 1.

La composante catalytique F obtenue contient 2,7 % en poids de titane.

La composante catalytique F est engagée en polymérisation en suspension dans les conditions de l'exemple 1 avec du triéthylaluminium.

On obtient une productivité de 11000 g de polyéthylène par g de composante catalytique. La masse volumique apparente du polymère est de 0,35 g/cm³.

### ESSAIS COMPARATIFS

12,9 g du support E sont désactivés par le traitement thermique suivant :
- de 20 à 120°C à 10°C/minute
- de 120 à 350°C à 6°C/minute
- palier de 2 heures à 350°C
- de 350 à 450°C à 10°C/minute
- palier de 30 minutes à 450°C

Le solide G obtenu est partagé en deux : une partie est convertie telle quelle en composante catalytique H, l'autre est réactivée par un mélange THF/heptane avant d'être transformée en composante catalytique J.

### a) Préparation de la composante catalytique H

3,2 g du solide G sont traités par TiCl₄ dans les conditions de l'exemple 1. On obtient un solide H contenant 0,1 % en poids de titane.

### b) Préparation de la composante catalytique J

3,1 g du solide G subissent un traitement de réactivation par traitement avec un mélange THF/heptane dans les conditions définies suivantes :
- le solide est mis en suspension dans 36,4 ml d'heptane
- 2,6 ml de THF sont ajoutés à la suspension à température ambiante
- la suspension est portée à 75°C pendant 1h30.

Après décantation et siphonnage du surnageant, le solide I obtenu est ensuite séché sous vide de 20 à 120°C.

La composante catalytique J est préparée dans les conditions de la composante H sauf le nombre de lavages au toluène qui est de deux. La composante catalytique J contient 5,4 % en poids de titane.

Les composantes catalytiques H et J sont engagées en polymérisation en suspension dans les conditions de l'exemple 1.

Les résultats obtenus sont les suivants :

| Composante | Productivité | mva |
|---|---|---|
| H | 160 g PE/g cata | 0,22 |
| J | 10400 g PE/g cata | 0,30 |
| mva = masse volumique apparente en g/cm³ | | |

### EXEMPLE 4

Le solide K de composition 77 % de MgCl₂ et 23 % en poids de MgO, de caractéristiques granulométriques suivantes : largeur de distribution des tailles des particules : 6,8 et taille moyenne : 58 µm, est partagé en deux : une partie est convertie telle quelle en composante catalytique L comparative, l'autre est activée par un mélange tétrahydropyrane (THP)-heptane avant d'être transformée en composante catalytique N.

### a) Préparation de la composante catalytique L

4,1 g du solide R sont traités par TiCl₄ dans les conditions de l'exemple 1. On obtient un solide L contenant 0,3 % en poids de titane.

### b) Préparation de la composante catalytique N

4 g du solide K subissent un traitement d'activation par traitement avec un mélange THP/heptane dans les conditions suivantes :
- le solide est mis en suspension dans 40 ml d'heptane
- 3,3 ml de THP sont ajoutés à la suspension à température ambiante
- la suspension est portée à 90°C pendant 1 h.

Après décantation et siphonnage du surnageant, le solide M obtenu est ensuite séché sous vide de 20 à 130°C.

Les caractéristiques granulométriques du solide M sont les suivantes : largeur de distribution des tailles des particules : 6,4 et taille moyenne des particules : 54 µm.

La composante catalytique N est ensuite préparée dans les conditions de la composante L. La composante catalytique N contient 9,4 % en poids de titane.

Les composantes catalytiques L et N sont engagées en suspension dans les conditions de l'exemple 1.

Les résultats obtenus sont les suivants :

| Composante | Productivité | mva |
|---|---|---|
| L | 260 g PE/g cata | 0,20 |
| N | 7000 g PE/g cata | 0,26 |
| mva = masse volumique apparente en g/cm³ | | |

### EXEMPLE 5

6,1 g de MgCl₂ anhydre sous forme de paillettes subissent un traitement avec un mélange THF/heptane dans les conditions suivantes :
- MgCl₂ est mis en suspension dans 75 ml d'heptane
- 5,2 ml de THF sont ajoutés à la suspension à température ambiante
- la suspension est portée à 75°C pendant 2 h.

Après décantation et siphonnage du surnageant, le solide O obtenu est ensuite séché sous vide à 30°C.

Le solide O est traité par TiCl₄ dans les conditions de l'exemple 1. La composante catalytique P obtenue contient 3,2 % en poids de titane.

La composante catalytique P est engagée en suspension dans les conditions de l'exemple 1 avec 2,1 bars d'hydrogène.

On obtient une productivité de 4000 g de polyéthylène par g de composante catalytique.

A titre comparatif, on répète l'essai avec une composante catalytique préparée par imprégnation par TiCl₄ de MgCl₂ anhydre sous forme de paillettes. L'activité est pratiquement nulle.

### EXEMPLE 6

Dans un réacteur de 2 l. équipé d'un système d'agitation type ancre marine, on mélange à 50°C, sous agitation de 100 t/mn pendant 30 mn : 1,2 mole de butyléthylmagnésium à 20 % dans l'heptane et 0,03 mole de tétraisobutylalumoxane, puis on ajoute en 3 h dans les mêmes conditions un mélange de 3 moles de tertiobutylchlorure et 1,2 mole d'éther diisoamylique. L'agitation est poursuivie durant 2 heures. La suspension est filtrée à l'aide d'un filtre de type fritté métallique puis lavée deux fois avec un volume de 500 cc d'hexane. Le solide est séché par balayage à l'azote à 60°C.

Au solide séché, on ajoute séparément 1800 cc d'hexane et 91 cc de THF. La suspension est agitée à 100 t/mn et la température est maintenue 2 h à 60°C.

Après filtration le solide est lavé deux fois avec 500 cc d'hexane. Le solide est ensuite séché par balayage à l'azote à 60°C pour former le support.

On ajoute au support 3,9 moles de TiCl₄ pur. La suspension est agitée 2 heures à 100 t/mn à une température de 80°C.

Après filtration on lave 5 fois avec 500 cc d'un mélange volumique 10/90 de TiCl₄/toluène à 80°C. On termine par trois lavages avec 500 cc d'hexane. Le solide obtenu est séché par balayage à l'azote à 60°C. On récupère 80 g de composante catalytique.

A titre comparatif on prépare une composante catalytique dans les mêmes conditions que précédemment, exception faite de l'étape de traitement du solide par le mélange tétrahydrofurane-hexane.

Une polymérisation est réalisée dans un réacteur agité de 1,5 litre équipé d'une double enveloppe pour fluide caloporteur permettant de réguler la température de réaction. Après purge et séchage du réacteur à l'azote, le réacteur est mis sous débordement d'azote à 40°C. On introduit successivement : 1 litre d'hexane, 6 mM de tétraisobutylaluminium et 25 mg de catalyseur en suspension dans l'hexane. On introduit ensuite de l'azote jusqu'à 2 bars absolus, puis on porte la température à 80°C et ajuste la pression à 3 bars absolus avec un appoint d'azote.

On ajoute ensuite successivement, sous agitation de 400 t/mn : 4 bars d'hydrogène et 6 bars d'éthylène. La pression totale est maintenue constante à 13 bars absolus au moyen d'un appoint d'éthylène.

La réaction dure 2 h, puis l'arrivée d'éthylène est arrêtée, on abaisse la température à 40°C puis on réduit la vitesse d'agitation à 100 t/mn avant de décomprimer le réacteur. Le réacteur est ensuite purgé à l'azote et on récupère le polymère en suspension. Cette suspension est filtrée et séchée.

On obtient une productivité pour la composante préparée à partir du support selon l'invention et du support comparatif respectivement de 20.960 et 6040 grammes de polyéthylène par gramme de composante catalytique et des masses voluminques apparentes identiques.

## Revendications

1. Procédé d'activation de support à base de chlorure de magnésium entrant dans la fabrication de composante catalytique de polymérisation de l'éthylène caractérisé en ce qu'on active le support en suspension dans un liquide inerte par un monoéther cyclique.

2. Procédé selon la revendication 1 caractérisé en ce que le rapport en volume de liquide inerte sur le monoéther cyclique est compris entre 10 et 20.

3. Procédé selon l'une des revendications 1 ou 2 caractérisé en ce que le rapport molaire monoéther cyclique sur chlorure de magnésium est inférieur à 1,5.

4. Procédé selon l'une des revendications 1 à 3 caractérisé en ce que l'activation s'effectue à une température comprise entre T_{eb} et (T_{eb} +20°C), T_{eb} étant la température d'ébullition du monoéther cyclique.

5. Procédé selon l'une des revendications 1 à 4 caractérisé en ce que le liquide inerte est choisi parmi les hydrocarbures aliphatiques.

6. Procédé selon l'une des revendications 1 à 5 caractérisé en ce que le monoéther cyclique est choisi parmi les monoéthers dont l'oxygène forme un cycle possédant au moins 4 atomes de carbone et 12 au plus.

7. Procédé selon l'une des revendications 1 à 6 caractérisé en ce que le support est mis en suspension dans une solution préalablement préparée de liquide inerte et de monoéther cyclique.

8. Procédé selon l'une des revendications 1 à 7 caractérisé en ce que le monoéther cyclique est le tétrahydrofurane.

9. Procédé selon l'une des revendications 1 à 7 caractérisé en ce que le monoéther est le tétrahydropyrane.

## Patentansprüche

1. Verfahren zur Aktivierung eines Trägers auf Basis von Magnesiumchlorid, der bei der Herstellung eines Katalysatorbestandteils für die Polymerisation von Ethylen verwendet wird, dadurch gekennzeichnet, daß man den Träger in Suspension in einer inerten Flüssigkeit mittels eines cyclischen Monoethers aktiviert.

2. Verfahren nach Anspruch 1, dadurch gekennzeichnet, daß das Volumenverhältnis von inerter Flüssigkeit zu cyclischem Monoether zwischen 10 und 20 liegt.

3. Verfahren nach Anspruch 1 oder 2, dadurch gekennzeichnet, daß das Molverhältnis von cyclischem Monoether zu Magnesiumchlorid geringer als 1,5 ist.

4. Verfahren nach einem der Ansprüche 1 bis 3, dadurch gekennzeichnet, daß die Aktivierung bei einer Temperatur zwischen T_{Siede} und (T_{Siede} + 20 °C) durchgeführt wird, wobei T_{Siede} die Siedetemperatur des cyclischen Monoethers ist.

5. Verfahren nach einem der Ansprüche 1 bis 4, dadurch gekennzeichnet, daß die inerte Flüssigkeit aus aliphatischen Kohlenwasserstoffen ausgewählt ist.

6. Verfahren nach einem der Ansprüche 1 bis 5, dadurch gekennzeichnet, daß der cyclische Monoether aus Monoestern ausgewählt ist, deren Sauerstoffatom einen Ring mit mindestens 4 und höchstens 12 Kohlenstoffatomen ausbildet.

7. Verfahren nach einem der Ansprüche 1 bis 6, dadurch gekennzeichnet, daß der Träger in einer Lösung in Suspension gebracht wird, die zuvor aus inerter Flüssigkeit und cyclischem Monoether hergestellt worden ist.

8. Verfahren nach einem der Ansprüche 1 bis 7, dadurch gekennzeichnet, daß der cyclische Monoether Tetrahydrofuran ist.

9. Verfahren nach einem der Ansprüche 1 bis 7, dadurch gekennzeichnet, daß der Monoether Tetrahydropyran ist.

## Claims

1. Process for activating a support based on magnesium chloride which takes part in the manufacture of the catalytic component for the polymerization of ethylene, characterized in that the support is activated, in suspension in an inert liquid, by a cyclic monoether.

2. Process according to Claim 1, characterized in that the ratio by volume of inert liquid to the cyclic monoether is between 10 and 20.

3. Process according to one of Claims 1 and 2, characterized in that the cyclic monoether to magnesium chloride molar ratio is less than 1.5.

4. Process according to one of Claims 1 to 3, characterized in that the activation is carried out at a temperature of between T_{b} and (T_{b} + 20°C), T_{b} being the boiling point of the cyclic monoether.

5. Process according to one of Claims 1 to 4, characterized in that the inert liquid is chosen from aliphatic hydrocarbons.

6. Process according to one of Claims 1 to 5, characterized in that the cyclic monoether is chosen from monoethers in which the oxygen forms a ring possessing at least 4 carbon atoms and at most 12.

7. Process according to one of Claims 1 to 6, characterized in that the support is suspended in a pre-prepared solution of inert liquid and of cyclic monoether.

8. Process according to one of Claims 1 to 7, characterized in that the cyclic monoether is tetrahydrofuran.

9. Process according to one of Claims 1 to 7, characterized in that the cyclic monoether is tetrahydropyran.
